# EUROPEAN PATENT APPLICATION

(11) **EP 4 422 311 A1**
(43) Date of publication of application: **28.08.2024**
(21) Application number: 22882942.0
(22) Date of filing: 20.10.2022
(51) Int. Cl.: H04W 72/04

(54) **DATA FORWARDING METHOD AND APPARATUS**

(30) Priority: 21.10.2021 CN 202111228354
(71) Applicant: Datang Mobile Communications Equipment Co., Ltd., Beijing 100085 (CN)
(72) Inventor: LIU, Aijuan, Beijing 100085 (CN); ZHOU, Ye, Beijing 100085 (CN)
(74) Representative: Studio Torta S.p.A.
(86) International application number: PCT/CN2022/126411
(87) International publication number: WO 2023/066337

(57) **Abstract**

The present disclosure provides a data forwarding method and a data forwarding device, and it relates to the field of communication technology. The data forwarding method includes transmitting, by a first network side device, first address information for data forwarding to a second network side device. The first address information includes second address information about a source node for data forwarding and third address information about an intermediate node, the intermediate node is a data relay node between the source node and a target node for data forwarding, and the source node is a secondary base station and/or the target node is a secondary base station.

## Description

### CROSS-REFERENCE TO RELATED APPLICATION

This application claims a priority of the Chinese patent application No.202111228354.8 filed on October 21, 2021, which is incorporated herein by reference in its entirety.

### TECHNICAL FIELD

The present disclosure relates to the field of communication technology, in particular to a data forwarding method and a data forwarding device.

### BACKGROUND

In a Long Term Evolution (LTE) system, an Evolved Universal Terrestrial Radio Access Network (E-UTRAN) consists of a plurality of LTE base stations (eNodeB, eNB), and each eNodeB is coupled to an Evolved Packet Core (EPC) through an S1 interface, and the eNodeBs are coupled to each other through an X2 interface. In order to support a larger data throughput, dual connectivity is achieved between User Equipments (UEs) through two eNodeBs. In a 5^{th}-Generation (5G) system, similar to the dual connectivity in the LTE system, Multi-Radio Access Type (RAT) Dual Connectivity (MR-DC) between the eNode B and a 5G base station (gNB) and dual connectivity between gNBs are also supported.

However, data forwarding presented in a current handover procedure merely relates to standalone to standalone. In the handover procedure, the UE is changed from the dual connectivity to the standalone, or from the standalone to the dual connectivity. For the data forwarding based on the standalone to the standalone, forwarded data may be discarded.

### SUMMARY

An object of the present disclosure is to provide a data forwarding method and a data forwarding device, so as to solve the problem in the handover procedure where the forwarded data is discarded.

In one aspect, the present disclosure provides in some embodiments a data forwarding method, including transmitting, by a first network side device, first address information for data forwarding to a second network side device. The first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, prior to transmitting, by the first network side device, the first address information for data forwarding to the second network side device, the data forwarding method further includes transmitting, by the first network side device, first request information to the source secondary base station connected to the UE in the dual connectivity state, and the first request information is used to request to obtain the second address information.

In a possible embodiment of the present disclosure, the transmitting, by the first network side device, the first address information for data forwarding to the second network side device includes transmitting, by the first network side device, a first handover request message to a Mobility Management Entity (MME) so that an Access and Mobility Management Function (AMF) transmits the first address information to the second network side device in accordance with the first handover request message. The first handover request message carries the first address information, and the second network side device is a base station under a network system different from the first network side device.

In a possible embodiment of the present disclosure, the transmitting, by the first network side device, the first address information for data forwarding to the second network side device includes transmitting, by the first network side device, a second handover request message to the second network side device, the second handover request message carries the first address information, and the second network side device is a base station under a same network system as the first network side device.

In a possible embodiment of the present disclosure, in the case that the first network side device is a target primary base station connected to the UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, the transmitting, by the first network side device, the first address information for data forwarding to the second network side device includes transmitting, by the first network side device, a first addition request message to the second network side device. The first addition request message carries the first address information, and the first addition request message is used to add the target secondary base station connected to the UE in a procedure of switching the UE from the standalone state to the dual connectivity state.

In a possible embodiment of the present disclosure, in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In a possible embodiment of the present disclosure, the transmitting, by the first network side device, the first address information for data forwarding to the second network side device includes transmitting, by the first network side device, a second addition request message to the second network side device. The second addition request message carries the first address information, and the second addition request message is used to add the target secondary base station connected to the UE in a procedure of changing a secondary base station connected to the UE.

In another aspect, the present disclosure provides in some embodiments a data forwarding method, including receiving, by a second network side device, first address information for data forwarding from a first network side device. The first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, after receiving, by the second network side device, the first address information for data forwarding from the first network side device, the data forwarding method further includes: determining, by the second network side device, whether or not direct data forwarding is supported between the source node and the target node in accordance with the second address information; in the case that the direct data forwarding is supported between the source node and the target node, adding, by the second network side device, the second address information into an address list of nodes allowed to connect; and in the case that the direct data forwarding is not supported between the source node and the target node, adding, by the second network side device, the third address information into the address list of nodes allowed to connect.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In yet another aspect, the present disclosure provides in some embodiments a data forwarding device, including a memory, a transceiver and a processor. The memory is configured to store therein a program instruction, the transceiver is configured to receive and transmit data under the control of the processor, and the processor is configured to read the program instruction in the memory. The transceiver is configured to transmit first address information for data forwarding to a second network side device. The first address information is transmitted by a first network side device, the first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, the transceiver is further configured to transmit first request information to the source secondary base station connected to the UE in the dual connectivity state, and the first request information is used to request to obtain the second address information.

In a possible embodiment of the present disclosure, the transceiver is further configured to transmit a first handover request message to an MME so that an AMF transmits the first address information to the second network side device in accordance with the first handover request message. The first handover request message carries the first address information, and the second network side device is a base station under a network system different from the first network side device.

In a possible embodiment of the present disclosure, the transceiver is further configured to transmit a second handover request message to the second network side device, the second handover request message carries the first address information, and the second network side device is a base station under a same network system as the first network side device.

In a possible embodiment of the present disclosure, in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, the transceiver is further configured to transmit a first addition request message to the second network side device. The first addition request message carries the first address information, and the first addition request message is used to add the target secondary base station connected to the UE in a procedure of switching the UE from the standalone state to the dual connectivity state.

In a possible embodiment of the present disclosure, in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In a possible embodiment of the present disclosure, the transceiver is further configured to transmit a second addition request message to the second network side device. The second addition request message carries the first address information, and the second addition request message is used to add the target secondary base station connected to the UE in a procedure of changing a secondary base station connected to the UE.

In still yet another aspect, the present disclosure provides in some embodiments a data forwarding device, including a first transmission module configured to transmit first address information for data forwarding to a second network side device. The first address information is transmitted by a first network side device, the first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, the data forwarding device further includes a second transmission module configured to transmit first request information to the source secondary base station connected to the UE in the dual connectivity state, and the first request information is used to request to obtain the second address information.

In a possible embodiment of the present disclosure, the first transmission module includes a first transmission unit configured to transmit a first handover request message to an MME so that an AMF transmits the first address information to the second network side device in accordance with the first handover request message. The first handover request message carries the first address information, and the second network side device is a base station under a network system different from the first network side device.

In a possible embodiment of the present disclosure, the first transmission module includes a second transmission unit configured to transmit a second handover request message to the second network side device, the second handover request message carries the first address information, and the second network side device is a base station under a same network system as the first network side device.

In a possible embodiment of the present disclosure, in the case that the first network side device is a target primary base station connected to the UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, the first transmission module includes a third transmission unit configured to transmit a first addition request message to the second network side device. The first addition request message carries the first address information, and the first addition request message is used to add the target secondary base station connected to the UE in a procedure of switching the UE from the standalone state to the dual connectivity state.

In a possible embodiment of the present disclosure, in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In a possible embodiment of the present disclosure, the first transmission module includes a fourth transmission unit configured to transmit a second addition request message to the second network side device. The second addition request message carries the first address information, and the second addition request message is used to add the target secondary base station connected to the UE in a procedure of changing a secondary base station connected to the UE.

In still yet another aspect, the present disclosure provides in some embodiments a data forwarding device, including a memory, a transceiver and a processor. The memory is configured to store therein a program instruction, the transceiver is configured to receive and transmit data under the control of the processor, and the processor is configured to read the program instruction in the memory. The transceiver is configured to receive first address information for data forwarding from a first network side device. The first address information is received by a second network side device, the first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, the processor is configured to: determine whether or not direct data forwarding is supported between the source node and the target node in accordance with the second address information; in the case that the direct data forwarding is supported between the source node and the target node, add the second address information into an address list of nodes allowed to connect; and in the case that the direct data forwarding is not supported between the source node and the target node, add the third address information into the address list of nodes allowed to connect.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In still yet another aspect, the present disclosure provides in some embodiments a data forwarding device, including a reception module configured to receive first address information for data forwarding from a first network side device. The first address information is received by a second network side device, the first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, the data forwarding device further includes: a determination module configured to determine whether or not direct data forwarding is supported between the source node and the target node in accordance with the second address information; a first addition module configured to, in the case that the direct data forwarding is supported between the source node and the target node, add the second address information into an address list of nodes allowed to connect; and a second addition module configured to, in the case that the direct data forwarding is not supported between the source node and the target node, add the third address information into the address list of nodes allowed to connect.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In still yet another aspect, the present disclosure provides in some embodiments a processor-readable storage medium storing a program instruction. The program instruction is executed by a processor so as to implement the above-mentioned data forwarding method.

The present disclosure at least has the following beneficial effect.

According to the embodiments of the present disclosure, the first network side device transmits the first address information carrying the second address information about the source node for data forwarding and the third address information about the intermediate node to the second network side device. In a scenario where the dual connectivity state is switched to the standalone state or the secondary base station is changed, the second network side device receives the forwarded data in accordance with the second address information or the third address information, so it is able to prevent the forwarded data from being lost.

### BRIEF DESCRIPTION OF THE DRAWINGS

Fig. 1 is a schematic view showing architecture of an MR-DC control plane connected to a SGC according to one embodiment of the present disclosure;
Fig. 2 is a flow chart of a data forwarding method according to one embodiment of the present disclosure;
Fig. 3 is a schematic view showing interaction of the data forwarding method according to one embodiment of the present disclosure;
Fig. 4 is another schematic view showing the interaction of the data forwarding method according to one embodiment of the present disclosure;
Fig. 5 is yet another schematic view showing the interaction of the data forwarding method according to one embodiment of the present disclosure;
Fig. 6 is still yet another schematic view showing the interaction of the data forwarding method according to one embodiment of the present disclosure;
Fig. 7 is another flow chart of the data forwarding method according to one embodiment of the present disclosure;
Fig. 8 is a block diagram of a data forwarding device according to one embodiment of the present disclosure;
Fig. 9 is a schematic view showing the data forwarding device according to one embodiment of the present disclosure;
Fig. 10 is another block diagram of the data forwarding device according to one embodiment of the present disclosure; and
Fig. 11 is another schematic view showing the data forwarding device according to one embodiment of the present disclosure.

### DETAILED DESCRIPTION

The expression "and/or" is merely used to describe the relationship between objects, and it includes three relationships. For example, "A and/or B" may represent that, there is only A, there are both A and B, and there is only B. Further, the symbol "/" usually refers to "or".

The expression "a plurality of' refers to two or more, and the other quantifiers are similar.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

At first, some concepts involved in the embodiments of the present disclosure will be described hereinafter.

### Dual connectivity architecture

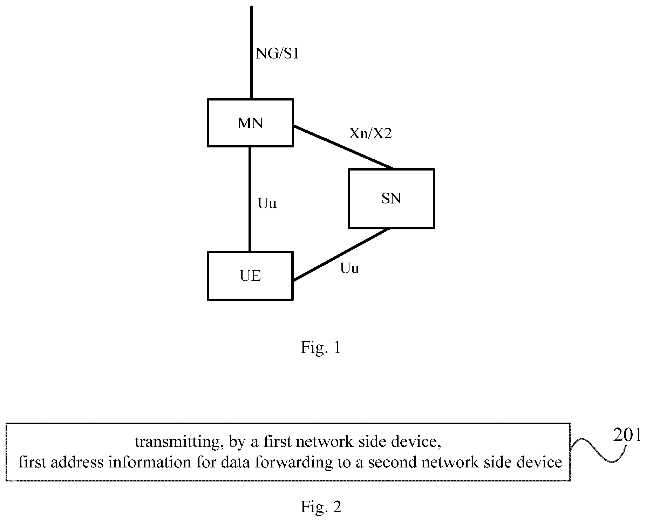

In the dual connectivity architecture, there are one Master Node (MN) and one or more Secondary Nodes (SNs). The MN and SNs are all nodes supporting LTE/e-LTE/New Radio (NR). When there is merely one MN and merely one SN, this architecture is called as dual connectivity. Fig. 1 shows architecture of an MR-DC control plane connected to a 5G Core Network (5GC). It should be appreciated that, Uu in Fig. 1 is a radio interface or an air interface.

A UE is connected to the MN and the SN through the air interface, and the MN is connected to the SN through an Xn interface (for the 5GC) or an X2-C interface (for an Evolved Packet Core (EPC). The MN is connected to a core network through an NG interface (for the 5GC) or an S 1 interface (for the EPC). Through dual (multiple) connectivity data transmission, it is able to improve a data volume/throughput of the UE, and meet the requirement on the transmission of a high-rate service. To be specific, there are the following types of dual connectivity: 4^{th}-Generation (4G) E-UTRAN-NR Dual Connectivity (EN-DC) in which the MN is an eNB, the SN is a GNB, and the eNB is connected to the EPC; Next Generation E-UTRAN-NR Dual Connectivity (NGEN-DC) in which the MN is an eNB, the SN is a gNB, and the eNB is connected to the 5GC; and NR-NR DC in which the MN is gNB, the SN is gNB, and the gNB is connected to the 5GC.

For a handover procedure from the EPS to a 5G System (5GS), a handover preparation procedure will be described as follows.

A source E-UTRAN node devices to switch the UE to 5G (in accordance with such information as measurement). The E-UTRAN node transmits a Handover Procedure message to an MME, and the Handover Procedure message carries whether or not direct data forwarding is supported, a target NG-RAN Node Identity (ID), and a source to target transparent container. When the direct data forwarding is supported, the source to target transparent container carries an address of a source side for direct data forwarding. In a Core Network (CN), through handshaking of the EPS with a series of network elements in the 5GC, an EPS bearer context at an MME side is converted into a Protocol Data Unit (PDU) session contents adapted to the 5GS. An AMF transmits a Handover Request message to an NG-RAN node, and the Handover Procedure message includes the source to target transparent container, Quality of Service (QoS) information corresponding to a PDU session ID of a target PDU session into which the EPS bearer is converted, whether or not data forwarding is supported, and an address of a source side for data forwarding. When a target base station has configured with an Access Control Lists (ACL) function, the target base station needs to add the address of the source side for data forwarding into an address list of base stations allowed to connect, so as to allow the base station to receive the forwarded data from the source side. The target NG-RAN node transmits a Handover Request Acknowledgement message to the AMF, and this message carries a target to source transparent container, information about a received PDU session and a QoS flow, and information about a tunnel assigned by the node for data forwarding. Through the handshaking of the EPS with a series of network elements of the 5GC, a target address assigned by the CN for data forwarding is notified to the MME. The MME transmits the address for data forwarding to a source eNB through a handover command.

In a Secondary gNB (SgNB) release procedure initiated by the source MN to the source SN, the MG assigns an address for data forwarding for an SN terminated Evolved Radio Access Bearer (E-RAB).

A procedure of switching from DC to Standalone (SA) will be described as follows.

The source MN transmits a handover request message to the base station so as to initiate a handover procedure, and the handover request message carries an address of a source side for data forwarding. When data forwarding is admitted by the base station, the target base station adds the address for data forwarding from the source side into an address list of base stations allowed to connect, so as to allow the receive the forwarded data from the source side. In a handover response message, the target base station provides a target address for data forwarding. The source MN initiates an SN release procedure to the source SN. In addition, in this procedure, the MN assigns an address for data forwarding for an SN terminated PDU session. The source MN transmits a reconfiguration message to the UE. The UE and a target gNB/target next generation eNodeB (ng-eNB, which is an updated 4G node connected to the 5GC) perform a synchronous random access procedure and a Radio Resource Control (RRC) connection reconfiguration completion procedure. For an SN terminated E-RAB, the SN transmits an SN Status Transfer message to the MN. Then, data forwarding is performed. The base station reports a secondary data report to the core network. The target base station initiates a path switching procedure. Then, the target base station initiates a UE context release procedure to the source base station, and a UE context is canceled at the source side.

A procedure of switching the SA to the DC will be described as follows.

The source ng-eNB/gNB transmits a handover request message to the target base station, and this message carries an address for data forwarding. The target MN transmits an SN Addition Request message to the target SN, and this message carries an address for data forwarding. The target SN adds the address provided by the target MN for data forwarding into an address list of base stations allowed to connect, so as to allow to receive the forwarded data transmitted by the source side through the target MN. The target SN transmits an SN Addition Request Acknowledgement message to the target MN. The target MN transmits a Handover Request Acknowledgement message to the source base station. The source ng-eNB/gNB triggers the UE to initiate a handover procedure. The EU, the target MN and the target SN perform a synchronous random access procedure and an RRC connection reconfiguration completion procedure. The target MN notifies the target SN that RRC reconfiguration is performed successfully. For a bearer using a Radio Link Control (RLC) Acknowledgement Mode (AM), the source ng-eNB/gNB transmits an SN Status Transfer message to the target MN, and the target MN further forwards it to the target SN. Then, data forwarding is performed. The target MN initiates a PDU session path switching procedure. Then, the target MN initiates a UE context release procedure to the source base station.

A procedure of changing the SN will be described as follows.

The MN transmits an SN addition request message to the target SN, and this message carries an address for data forwarding. The target SN adds the address for data forwarding into an address list of base stations allowed to connect, so as to allow to receive the forwarded data transmitted by the source side through the MN. The target SN transmits an SN Addition Request Acknowledgement message to the MN. The MN releases the source SN, and transmits an RRC connection reconfiguration message so as to trigger the UE to establish a connection with the target SN. The UE provides a response message. The MN notifies the target SN that RRC connection reconfiguration is performed successfully. The UE initiates a random access procedure to the target SN. For a bearer using an RL AM, the source ng-eNB/gNB transmits an SN Status Transfer message to the target MN, and the target MN further forwards it to the target SN. Then, data forwarding is performed. The source SB transmits a secondary RAT data usage report. The MN initiates a PDU session modification procedure, and initiates a UE context release procedure to the source SN.

In the handover procedure, the UE is switched from the DC state into the SA state, or from the SA state into the DC state. Currently, direct or indirect data forwarding is supported in the handover procedure, and each node makes its own judgment about direct or indirect data forwarding in the handover procedure. In addition, in order to ensure the network security, some base stations merely receive data from nodes in the list of IP address allowed to connect. When the target base station is one of these base stations and an address of the source node for data forwarding is included in the list, the data forwarded by the source side is received by the target base station; otherwise, the data is discarded. Hence, in the handover procedure, a user plane address of the source side needs to be carried in the handover request message. The target base station adds the address of the source side into the list so as to support the subsequent user plane data forwarding.

The present disclosure provides in some embodiments a data forwarding method and a data forwarding device. The method and the device are provided on the basis of a same inventive concept, and a principle of the method for solving the problem is similar to that of the device, so the implementation of the device may refer to that of the method.

As shown in Fig. 2, the present disclosure provides in some embodiments a data forwarding method, which includes Step 201 of transmitting, by a first network side device, first address information for data forwarding to a second network side device. The first address information includes second address information about a source node for data forwarding and third address information about an intermediate node, the intermediate node is a data relay node between the source node and a target node for data forwarding, and the source node is a secondary base station and/or the target node is a secondary base station.

In other words, the first address information transmitted by the first network side device (base station A) to the second network side device (base station B) includes the second address information about the source node and the third address information about the intermediate node for data forwarding in the case that direct data forwarding is performed between the source node for data forwarding and the target node. In a scenario where a dual connectivity state is switched to a standalone state or a secondary base station changes, the second network side device receives the forwarded data in accordance with the second address information or third address information, so as to prevent the forwarded data from being lost.

It should be further appreciated that, in the case that data relay is performed between the source node for data forwarding and the target node through the other NG-RAN node, the third address information is address information about the corresponding NG-RAN node for data forwarding.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In other words, in the case that the UE is switched from the dual connectivity state to the standalone state, the first network side device is a source primary base station (a source MN) connected to the UE and the second network side device is a target base station connected to the UE, the second address information is address information about a source secondary base station (a source SN) connected to UE, and the third address information is address information about the source MN.

Further, in the case that the UE is switched from the dual connectivity state to the standalone state and the source primary base station initiates a handover request to the target base station, the handover request carries the address information about the source primary base station and the source secondary base station for data forwarding. The target base station determines whether or not an address of the source primary base station or source secondary base station for data forwarding into an address list of base stations allowed to connect in accordance with whether or not there is a path for direct data forwarding between the target base station and the source secondary base station, so as to ensure that the forwarded data is not discarded.

In the embodiments of the present disclosure, the dual connectivity state refers to a state in which the UE is in communication with two base stations (the source primary base station and the source secondary base station), and the standalone state refers to a state in which the UE is in communication with one base station (e.g., the target base station).

In a possible embodiment of the present disclosure, prior to transmitting, by the first network side device, the first address information for data forwarding to the second network side device, the data forwarding method further includes transmitting, by the first network side device, first request information to the source secondary base station connected to the UE in the dual connectivity state, and the first request information is used to request to obtain the second address information.

To be specific, in the dual connectivity state, the first network side device (the source MN) transmits the first request information (SgNB Modification request message) to the source secondary base station (the source SN), so as to request the source SN to provide the second address information for data forwarding with the target base station.

In a possible embodiment of the present disclosure, the transmitting, by the first network side device, the first address information for data forwarding to the second network side device includes transmitting, by the first network side device, a first handover request message to an MME so that an AMF transmits the first address information to the second network side device in accordance with the first handover request message. The first handover request message carries the first address information, and the second network side device is a base station under a network system different from the first network side device.

During the implementation, in the dual connectivity state, the second network side device is a base station under a network system different from the first network side device. For example, the first network side device (the source MN) switches the UE to a 5G base station (the second network side device) in accordance with such information as measurement information, and the source MN transmits a first handover procedure message to the MME. When the first handover procedure message carries an indicator Direct Data Forwarding Available, the AMF transmits the first handover request message to the second network side device (the target base station), the first handover request message carries the first address information, and the first address information includes the second address information for data forwarding from the source SN to the target base station and the third address information about the source MN for relaying the forwarded data between the source SN and the target base station.

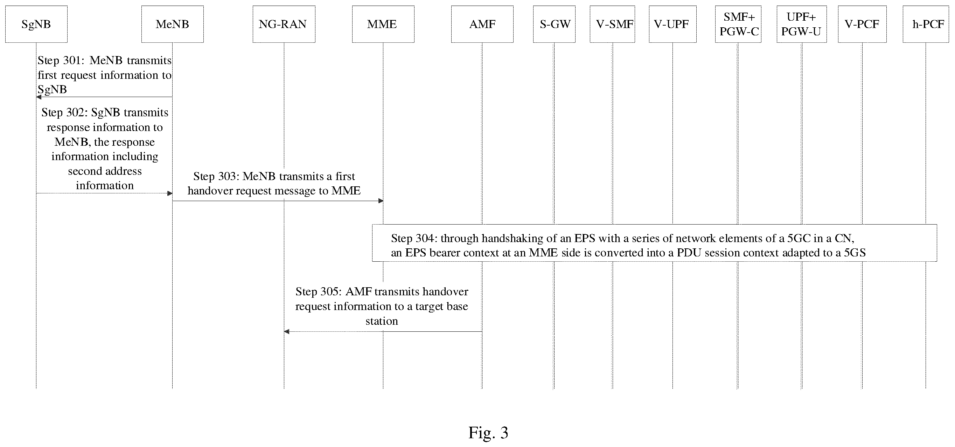

A data forwarding procedure in the dual connectivity state will be described illustratively hereinafter in conjunction with Fig. 3.

In the embodiments of the present disclosure, the UE operates in an EN-DC scenario, and the source primary base station (MeNB) initiates an inter-rat handover procedure to an NG-RAN node in accordance with a measurement result. In the EN-DC scenario, the primary base station (MN) is an eNB, the secondary base station (SN) is a gNB, and eNB is connected to an EPC. In Fig. 3, S-GW represents Serving GateWay, V-SMF represents Visited Session Management Function, V-UPF represents Visited User Plane Function, SMF represents Session Management Function, PGW-C represents PDN Gateway-Control, PDN represents Packet Data Network, UPF represents User Plane Function, PGW-U represents PDN Gateway-User, V-PCF represents Visited Policy Control Function, and h-PCF represents Home Policy Control Function.

In the data forwarding procedure, the source primary base station decides to switch the UE to the 5G base station. Step 301: the source primary base station transmits an SgNB Modification request message (the first request information) to the secondary base station (SgNB), so as to request the secondary base station to provide the address information for direct data forwarding with the target base station (the second address information). Step 302: the secondary base station transmits an SgNB modification response message to the source primary base station, and the SgNB modification response message includes the second address information. Step 303: the source primary base station transmits a handover request message (the first handover request message) to the MME). When the handover request message carries an indicator Direct Data Forwarding Available, the source primary base station carries the address information for direct data forwarding for the source secondary base station (the second address information) and the address information about the source primary base station for relaying the forwarded data between the source secondary base station and the target base station (the third address information). Step 304: in the CN, through handshaking of the EPS with a series of network elements of the 5GC, an EPS bearer context at the MME side is converted into a PDU session context adapted to the 5GS. Step 305: the AMF transmits a handover request message to the target base station (NG-RAN). When the handover request message in Step 303 carries the indicator Direct Data Forwarding Available, the handover request message in this step carries the address information for direct data forwarding received in Step 303. When the target base station determines that there is a direct data forwarding channel between the target base station and the source secondary base station, an address of the source secondary base station in the handover request message is added into the address list of base stations allowed to connect, so as to allow to receive the forwarded data from the source side. When the target base station determines that there is no direct data forwarding channel between the target base station and the source secondary base station, an address of the source primary base station in the handover request message is added into the address list of base stations allowed to connect, so as to allow to receive the forwarded data from the source side. Subsequent to Step 305, through the handshaking of the EPS with a series of network elements of the 5GC, a target address assigned by the CN for data forwarding is notified to the MME. The MME transmits the address for data forwarding to the source primary base station through a handover command. The source primary base station initiates an SgNB release procedure to the source secondary base station, and in this procedure, the MN provides an address assigned by the MN for an SN terminated E-RAB for data forwarding.

In another possible embodiment of the present disclosure, the transmitting, by the first network side device, the first address information for data forwarding to the second network side device includes transmitting, by the first network side device, a second handover request message to the second network side device, the second handover request message carries the first address information, and the second network side device is a base station under a same network system as the first network side device.

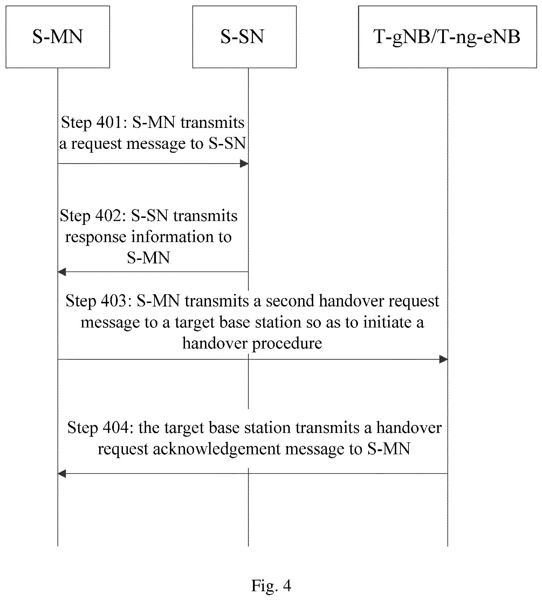

A data forwarding procedure will be described illustratively hereinafter in conjunction with Fig. 4.

In the embodiments of the present disclosure, the UE is switched from the DC state to the SA state.

The data forwarding procedure includes the following steps. Step 401: the source primary base station (the first network side device, S-MN) transmits an SgNB modification request message to the source secondary base station (S-SN), so as to request the source secondary base station to provide the address information for direct data forwarding with the target base station (the second network side device, T-gNB/T-ng-eNB) (the second address information). Step 402: the source secondary base station transmits an SgNB Modification response message to the source primary base station, and the response message includes the second address information. Step 403: the source primary base station transmits a second handover request message to the target base station so as to initiate a handover procedure. The source primary base station carries the address information about the source secondary base station for data forwarding (the second address information) and the address information about the source primary base station for relaying the forwarded data between the source secondary base station and the target base station (the third address information). Step 404: the target base station transmits a handover request acknowledgement message to the source primary base station. When the target base station determines that there is a direct data forwarding channel between the target base station and the source secondary base station, an address of the source secondary base station in the second handover request message is added into the address list of base stations allowed to connect, so as to allow to receive the forwarded data from the source side. When the target base station determines that there is no direct data forwarding channel between the target base station and the source secondary base station, an address of the source primary base station in the second handover request message is added into the address list of base stations allowed to connect, so as to allow to receive the forwarded data from the source side. The target base station transmits a handover request acknowledgement message to the source base station, and the handover request acknowledgement message carries the address for data forwarding.

Subsequent to Step 404, the source primary base station initiates an SN release procedure to the source secondary base station. In addition, in this procedure, the MN provides an address assigned by the MN for an SN terminated PDU session for data forwarding. The source MN transmits a reconfiguration message to the EU, and synchronization is performed between the UE and the target gNB/ng-eNB. For an SN terminated E-RAB, the SN transmits an SN STATUS TRANSFER message to the MN. Then, data forwarding started to be performed. The base station reports a secondary data report to the core network. The target base station initiate a path switching procedure (the forwarded data and an end marker are directly transmitted by the source SN to the target base station). The target base station initiates a UE Context Release procedure to the source base station, and a UE context is canceled by the source side.

In a possible embodiment of the present disclosure, in the case that the first network side device is a target primary base station connected to the UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In other words, in the case that the UE is switched from the standalone state to the dual connectivity state, the first network side device is the target primary base station (target MN) connected to the UE and the second network side device is the target secondary base station (target SN) connected to the UE, the second address is address information about the source base station connected to the UE in the standalone state, and the third address information is address information about the target primary base station (target MN).

In other words, in the case that the UE is switched from the standalone state to the dual connectivity state and the addition of the SN is performed by the target primary base station, the SN addition request message carries a relay address assigned by the target MN for data forwarding and an address of the source base station for data forwarding. When the target SN supports direct data forwarding with the source base station, the address of the source base station for data forwarding in the SN addition request message is added into the address list of base stations allowed to connect, so as to allow to receive the directly-forwarded data from the source base station. When the target SN does not support direct data forwarding with the source base station, the address of the target MN for data forwarding in the SN addition request message is added into the address list of base stations allowed to connected, so as to allow to receive the forwarded data relayed through the target MN.

In a possible embodiment of the present disclosure, the transmitting, by the first network side device, the first address information for data forwarding to the second network side device includes transmitting, by the first network side device, a first addition request message to the second network side device. The first addition request message carries the first address information, and the first addition request message is used to add the target secondary base station connected to the UE in a procedure of switching the UE from the standalone state to the dual connectivity state.

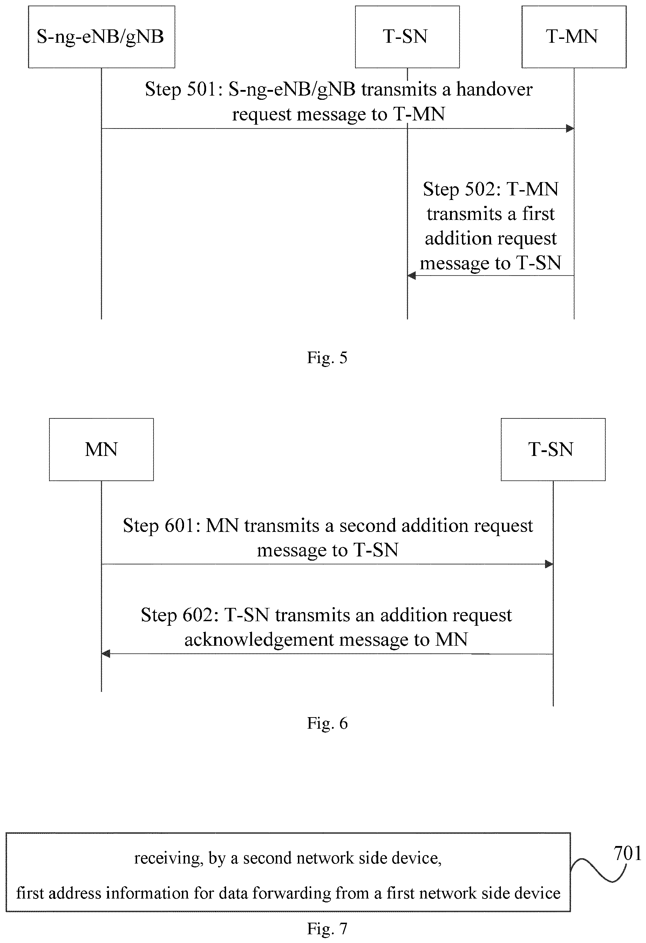

A data forwarding procedure will be described illustratively hereinafter in conjunction with Fig. 5.

In the embodiments of the present disclosure, the UE is switched from the SA state to the DC state.

The data forwarding procedure includes the following steps. Step 501: the source base station (S-ng-eNB/gNB) transmits a handover request message to the target primary base station (the first network side device, T-MN), and the handover request message carries address information for data forwarding at the source side. Step 502: the target primary base station transmits a first SN addition request message to the target secondary base station (the second network side device, T-SN). The first addition request message carries address information assigned by the target primary base station for data relay and address information about the source base station for direct data forwarding. The target secondary base station determines whether or not direct data forwarding is supported between the target secondary base station and the source base station. When direct data forwarding is supported between the target secondary base station and the source base station, an address of the source base station for data forwarding provided by the target primary base station is added into the address list of base stations allowed to connect, so as to allow to receive the data directly forwarded by the source side. When direct data forwarding is not supported between the target secondary base station and the source base station, an address assigned by the target primary base station for data forwarding is added into the address list of base stations allowed to connect, so as to allow to receive the data relayed through the target primary base station. The target secondary base station transmits an SN addition request acknowledgement message to the target base station. Subsequent to Step 502, the target primary base station transmits a handover request acknowledgement message to the source base station. The source base station triggers the UE to initiate a handover procedure. The UE, the target MN and the target SN perform a synchronous random access procedure and an RRC connection reconfiguration completion procedure. The target MN notifies the target SN that the RRC reconfiguration is performed successfully. For a bearer using an RLC AM, the source ng-eNB/gNB transmits an SN status transfer message to the target MN, and the target MN further forwards it to the target SN. Then, data forwarding is performed. The target MN initiates a PDU session path switching procedure, and initiates a UE context release procedure to the source base station.

In a possible embodiment of the present disclosure, in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In other words, in a scenario where a secondary base station for the UE in the dual connectivity state is change, in the case that the first network side device is the primary base station (MN) connected to the UE and the second network side device is the target secondary base station (target SN) connected to the UE in the dual connectivity state after the change of the secondary base station, the second address information is address information about the source secondary base station (source SN) connected to the UE in the dual connectivity state, and the third address information is address information about the primary base station (MN).

Further, in the case that the SN of the UE in the dual connectivity state is changed and the addition of the SN is performed by the MN, the SN addition request message carries a relay address assigned by the MN for data forwarding and an address of the source SN for data forwarding. When the target SN supports direct data forwarding with the source SN, the address of the source SN for data forwarding in the SN addition request message is added into the address list of base stations allowed to connect, so as to allow to receive the directly-forwarded data from the source SN. When the target SN does not support direct data forwarding with the source SN, the address of the MN for data forwarding in the SN addition request message is added into the address list of base stations allowed to connected, so as to allow to receive the forwarded data relayed through the MN.

In a possible embodiment of the present disclosure, the transmitting, by the first network side device, the first address information for data forwarding to the second network side device includes transmitting, by the first network side device, a second addition request message to the second network side device. The second addition request message carries the first address information, and the second addition request message is used to add the target secondary base station connected to the UE in a procedure of changing a secondary base station connected to the UE.

A data forwarding procedure will be described illustratively in conjunction with Fig. 6.

In the embodiments of the present disclosure, an SN of the UE is changed.

The data forwarding procedure includes the following steps. Step 610: the primary base station (the first network side device, MN) transmits a second SN addition request message to the target secondary base station (the second network side device, T-SN), and the second SN addition request message carries address information about the source SN (S-SN) for data forwarding and address information about the MN for data relay. Step 602: the target secondary base station transmits an SN addition request acknowledgement message to the primary base station. The target SN determines whether direct data forwarding is supported between the target SN and the source SN. When direct data forwarding is supported between the target SN and the source SN, an address of the source SN provided by the MN for data forwarding is added into the address list of base stations allowed to connect, so as to allow to receive the data directly forwarded by the source SN. When direct data forwarding is not supported between the target SN and the source SN, an address assigned by the MN for data forwarding is added into the address list of base stations allowed to connect, so as to allow to receive the data relayed through the MN. The target SN transmits an SN addition request acknowledgement message to the target secondary base station. Subsequent to Step 602, the source SN is released by the MN. The MN transmits an RRC connection reconfiguration message so as to trigger the UE to establish a connection with the target SN, and the UE transmits a response message to the MN. The MN notifies the target SN that the RRC connection reconfiguration is performed successfully. The UE initiates a random access procedure to the target SN. For a bearer using an RLC AM, the source ng-eNB/gNB transmits an SN status transfer message to the target MN, and the target MN further forwards it to the target SN. Then, data forwarding is performed. The source SN transmits a secondary RAT data usage report. The MN initiates a PDU session modification procedure (the forwarded data and an end marker are directly transmitted by the source SN to the target SN). The MN initiates a UE context release procedure to the source SN.

As shown in Fig. 7, the present disclosure further provides in some embodiments a data forwarding method, which includes Step 701 of receiving, by a second network side device, first address information for data forwarding from a first network side device. The first address information includes second address information about a source node for data forwarding and third address information about an intermediate node, the intermediate node is a data relay node between the source node and a target node for data forwarding, and the source node is a secondary base station and/or the target node is a secondary base station.

In the embodiments of the present disclosure, the first network side device transmits the first address information carrying the second address information about the source node for data forwarding the third address information about the intermediate node to the second network side device, so it is able for the second network side device to receive the forwarded data in accordance with the second address information or the third address information, thereby to prevent the forwarded data from being lost.

In a possible embodiment of the present disclosure, after receiving, by the second network side device, the first address information for data forwarding from the first network side device, the data forwarding method further includes: determining, by the second network side device, whether or not direct data forwarding is supported between the source node and the target node in accordance with the second address information; in the case that the direct data forwarding is supported between the source node and the target node, adding, by the second network side device, the second address information into an address list of nodes allowed to connect; and in the case that the direct data forwarding is not supported between the source node and the target node, adding, by the second network side device, the third address information into the address list of nodes allowed to connect.

To be specific, the second network side device decides to add a received address of the source node or the target node into the address list of base stations allowed to connect in accordance with whether or not direct data forwarding is supported between the source node for data forwarding and the target node, so as to prevent the forwarded data from being discarded.

In a DC-to-SA handover procedure, a handover request message transmitted by the source MN to the target node carries an address of the source SN for data forwarding and an address of the source MN for relaying the forwarded data between the source SN and the target node. The target node decides to add an address of the source SN or the source MN into the address list of nodes allowed to connect in accordance with whether or not there is a direct data forwarding path between the target node and the source SN, so as to prevent the forwarded data from being discarded.

In an SA-to-DC handover procedure, an SN addition message transmitted by the target MN to the target SN carries an address of the source node for data forwarding and an address of the target MN for relaying the forwarded data between the source node and the target SN. The target SN decides to add an address of the source node or the target MN into the address list of nodes allowed to connect in accordance with whether or not there is a direct data forwarding path between the target SN and the source node, so as to prevent the forwarded data from being discarded.

In an SN change procedure, an SN addition message transmitted by the MN to the target SN carries an address of the source SN for data forwarding and an address of the MN for relaying the forwarded data between the source SN and the target SN. The target SN decides to add an address of the source node or the MN into the address list of nodes allowed to connect in accordance with whether or not there is a direct data forwarding path between the target SN and the source SN, so as to prevent the forwarded data from being discarded.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

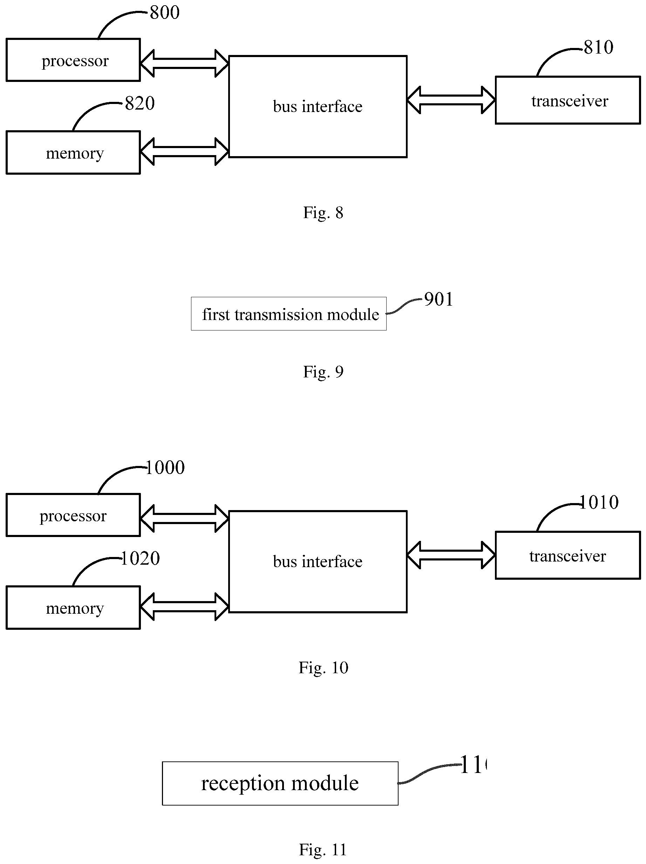

As shown in Fig. 8, the present disclosure further provides in some embodiments a data forwarding device, which includes a memory 820, a transceiver 810 and a processor 800. The memory 820 is configured to store therein a program instruction, the transceiver 810 is configured to receive and transmit data under the control of the processor 800, and the processor 800 is configured to read the program instruction in the memory 820. The transceiver 810 is configured to transmit first address information for data forwarding to a second network side device. The first address information is transmitted by a first network side device, the first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, the transceiver 810 is further configured to transmit first request information to the source secondary base station connected to the UE in the dual connectivity state, and the first request information is used to request to obtain the second address information.

In a possible embodiment of the present disclosure, the transceiver 810 is further configured to transmit a first handover request message to an MME so that an AMF transmits the first address information to the second network side device in accordance with the first handover request message. The first handover request message carries the first address information, and the second network side device is a base station under a network system different from the first network side device.

In a possible embodiment of the present disclosure, the transceiver 810 is further configured to transmit a second handover request message to the second network side device, the second handover request message carries the first address information, and the second network side device is a base station under a same network system as the first network side device.

In a possible embodiment of the present disclosure, in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, the transceiver 810 is further configured to transmit a first addition request message to the second network side device. The first addition request message carries the first address information, and the first addition request message is used to add the target secondary base station connected to the UE in a procedure of switching the UE from the standalone state to the dual connectivity state.

In a possible embodiment of the present disclosure, in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In a possible embodiment of the present disclosure, the transceiver 810 is further configured to transmit a second addition request message to the second network side device. The second addition request message carries the first address information, and the second addition request message is used to add the target secondary base station connected to the UE in a procedure of changing a secondary base station connected to the UE.

In Fig. 8, bus architecture may include a number of buses and bridges connected to each other, so as to connect various circuits for one or more processors 800 and one or more memories 820. In addition, as is known in the art, the bus architecture may be used to connect any other circuits, such as a circuit for a peripheral device, a circuit for a voltage stabilizer and a power management circuit. A bus interface may be provided, and the transceiver 810 may consist of a plurality of elements, i.e., a transmitter and a receiver for communication with any other devices over a transmission medium. The transmission medium includes a wireless channel, a wired channel, or an optical cable. The processor 800 may take charge of managing the bus architecture as well as general processing. The memory 820 may store therein data for the operation of the processor 800.

The processor 800 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

Here, it should be appreciated that, the device in the embodiments of the present disclosure is used to implement the steps of the above-mentioned method with a same technical effect, which will not be particularly defined herein.

As shown in Fig. 9, the present disclosure further provides in some embodiments a data forwarding device, which includes a first transmission module 901 configured to transmit first address information for data forwarding to a second network side device. The first address information is transmitted by a first network side device, the first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, the data forwarding device further includes a second transmission module configured to transmit first request information to the source secondary base station connected to the UE in the dual connectivity state, and the first request information is used to request to obtain the second address information.

In a possible embodiment of the present disclosure, the first transmission module 901 includes a first transmission unit configured to transmit a first handover request message to an MME so that an AMF transmits the first address information to the second network side device in accordance with the first handover request message. The first handover request message carries the first address information, and the second network side device is a base station under a network system different from the first network side device.

In a possible embodiment of the present disclosure, the first transmission module 901 includes a second transmission unit configured to transmit a second handover request message to the second network side device, the second handover request message carries the first address information, and the second network side device is a base station under a same network system as the first network side device.

In a possible embodiment of the present disclosure, in the case that the first network side device is a target primary base station connected to the UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, the first transmission module 901 includes a third transmission unit configured to transmit a first addition request message to the second network side device. The first addition request message carries the first address information, and the first addition request message is used to add the target secondary base station connected to the UE in a procedure of switching the UE from the standalone state to the dual connectivity state.

In a possible embodiment of the present disclosure, in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In a possible embodiment of the present disclosure, the first transmission module 901 includes a fourth transmission unit configured to transmit a second addition request message to the second network side device. The second addition request message carries the first address information, and the second addition request message is used to add the target secondary base station connected to the UE in a procedure of changing a secondary base station connected to the UE.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

Here, it should be appreciated that, the device in the embodiments of the present disclosure is used to implement the steps of the above-mentioned method with a same technical effect, which will not be particularly defined herein.

The present disclosure further provides in some embodiments a processor-readable storage medium storing therein a program instruction. The program instruction is executed by a processor so as to transmit through a transceiver first address information for data forwarding to a second network side device. The first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, first request information is transmitted through the transceiver to the source secondary base station connected to the UE in the dual connectivity state, and the first request information is used to request to obtain the second address information.

In a possible embodiment of the present disclosure, a first handover request message is transmitted through the transceiver to an MME so that an AMF transmits the first address information to the second network side device in accordance with the first handover request message. The first handover request message carries the first address information, and the second network side device is a base station under a network system different from the first network side device.

In a possible embodiment of the present disclosure, a second handover request message is transmitted through the transceiver to the second network side device, the second handover request message carries the first address information, and the second network side device is a base station under a same network system as the first network side device.

In a possible embodiment of the present disclosure, in the case that the first network side device is a target primary base station connected to the UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, a first addition request message is transmitted through the transceiver to the second network side device. The first addition request message carries the first address information, and the first addition request message is used to add the target secondary base station connected to the UE in a procedure of switching the UE from the standalone state to the dual connectivity state.

In a possible embodiment of the present disclosure, in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In a possible embodiment of the present disclosure, a second addition request message is transmitted through the transceiver to the second network side device. The second addition request message carries the first address information, and the second addition request message is used to add the target secondary base station connected to the UE in a procedure of changing a secondary base station connected to the UE.

The program instruction is executed by the processor so as to implement the above-mentioned data forwarding method in Fig. 2, which will not be particularly defined herein.

As shown in Fig. 10, the present disclosure further provides in some embodiments a data forwarding device, which includes a memory 1020, a transceiver 1010 and a processor 1000. The memory 1020 is configured to store therein a program instruction, the transceiver 1010 is configured to receive and transmit data under the control of the processor 1000, and the processor 1000 is configured to read the program instruction in the memory 1020. The transceiver 1010 is configured to receive first address information for data forwarding from a first network side device. The first address information is received by a second network side device, the first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, the processor 1000 is configured to: determine whether or not direct data forwarding is supported between the source node and the target node in accordance with the second address information; in the case that the direct data forwarding is supported between the source node and the target node, add the second address information into an address list of nodes allowed to connect; and in the case that the direct data forwarding is not supported between the source node and the target node, add the third address information into the address list of nodes allowed to connect.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

In Fig. 10, bus architecture may include a number of buses and bridges connected to each other, so as to connect various circuits for one or more processors 1000 and one or more memories 1020. In addition, as is known in the art, the bus architecture may be used to connect any other circuits, such as a circuit for a peripheral device, a circuit for a voltage stabilizer and a power management circuit. A bus interface may be provided, and the transceiver 1010 may consist of a plurality of elements, i.e., a transmitter and a receiver for communication with any other devices over a transmission medium. The transmission medium includes a wireless channel, a wired channel, or an optical cable. The processor 1000 may take charge of managing the bus architecture as well as general processing. The memory 1020 may store therein data for the operation of the processor 1000.

The processor 1000 is a CPU, an ASIC, an FPGA or a CPLD. The processor may also use multi-core architecture.

The processor 1000 is configured to call the program instruction in the memory, so as to implement the above-mentioned method in accordance with obtained executable instructions. The processor 1000 may also be physically separated from the memory 1020.

Here, it should be appreciated that, the device in the embodiments of the present disclosure is used to implement the steps of the above-mentioned method with a same technical effect, which will not be particularly defined herein.

As shown in Fig. 11, the present disclosure further provides in some embodiments a data forwarding device, which includes a reception module 1101 configured to receive first address information for data forwarding from a first network side device. The first address information is received by a second network side device, the first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, the data forwarding device further includes: a determination module configured to determine whether or not direct data forwarding is supported between the source node and the target node in accordance with the second address information; a first addition module configured to, in the case that the direct data forwarding is supported between the source node and the target node, add the second address information into an address list of nodes allowed to connect; and a second addition module configured to, in the case that the direct data forwarding is not supported between the source node and the target node, add the third address information into the address list of nodes allowed to connect.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

Here, it should be appreciated that, the device in the embodiments of the present disclosure is used to implement the steps of the above-mentioned method with a same technical effect, which will not be particularly defined herein.

The present disclosure further provides in some embodiments a processor-readable storage medium storing therein a program instruction. The program instruction is executed by a processor, so as to receive through a transceiver first address information for data forwarding from the first network side device. The first address information includes second address information about a source node for data forwarding and third address information about an intermediate node, the intermediate node is a data relay node between the source node and a target node for data forwarding, and the source node is a secondary base station and/or the target node is a secondary base station.

In a possible embodiment of the present disclosure, the processor is configured to determine whether or not direct data forwarding is supported between the source node and the target node in accordance with the second address information. In the case that the direct data forwarding is supported between the source node and the target node, the second address information is added by a second network side device into an address list of nodes allowed to connect. In the case that the direct data forwarding is not supported between the source node and the target node, the third address information is added by the second network side device into the address list of nodes allowed to connect.

In a possible embodiment of the present disclosure, in the case that the first network side device is a source primary base station connected to a UE in a dual connectivity state and the second network side device is a target base station, the second address information is address information about a source secondary base station connected to the UE in the dual connectivity state, and the third address information is address information about the source primary base station. The target base station is a base station connected to the UE after the UE has been switched from the dual connectivity state to a standalone state.

In a possible embodiment of the present disclosure, in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

In a possible embodiment of the present disclosure, in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

The program instruction is executed by the processor so as to implement the above-mentioned method for the UE in Fig. 7, which will not be particularly defined herein.

Schemes in the embodiments of the present disclosure may be applied to various systems, especially a 5G system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5^{th}-Generation (5G) New Radio (NR) system. Each of these systems includes a terminal device and a network device. Each system further includes a core network part, e.g., an Evolved Packet System (EPS) or 5G system (SGS).

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, one module may be a processing element arranged separately, or integrated into a chip of the above-mentioned device. In addition, the module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A data forwarding method, comprising:
transmitting, by a first network side device, first address information for data forwarding to a second network side device,
wherein the first address information comprises second address information about a source node for data forwarding and third address information about an intermediate node, the intermediate node is a data relay node between the source node and a target node for data forwarding, and the source node is a secondary base station and/or the target node is a secondary base station.

2. The data forwarding method according to claim 1, wherein in the case that the first network side device is a source primary base station connected to a UE in a dual connectivity state and the second network side device is a target base station, the second address information is address information about a source secondary base station connected to the UE in the dual connectivity state, and the third address information is address information about the source primary base station, wherein the target base station is a base station connected to the UE after the UE has been switched from the dual connectivity state to a standalone state.

3. The data forwarding method according to claim 2, wherein prior to transmitting, by the first network side device, the first address information for data forwarding to the second network side device, the data forwarding method further comprises transmitting, by the first network side device, first request information to the source secondary base station connected to the UE in the dual connectivity state, and the first request information is used to request to obtain the second address information.

4. The data forwarding method according to claim 2 or 3, wherein the transmitting, by the first network side device, the first address information for data forwarding to the second network side device comprises transmitting, by the first network side device, a first handover request message to a Mobility Management Entity (MME) so that an Access and Mobility Management Function (AMF) transmits the first address information to the second network side device in accordance with the first handover request message,
wherein the first handover request message carries the first address information, and the second network side device is a base station under a network system different from the first network side device.

5. The data forwarding method according to claim 2 or 3, wherein the transmitting, by the first network side device, the first address information for data forwarding to the second network side device comprises transmitting, by the first network side device, a second handover request message to the second network side device, the second handover request message carries the first address information, and the second network side device is a base station under a same network system as the first network side device.

6. The data forwarding method according to claim 1, wherein in the case that the first network side device is a target primary base station connected to the UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

7. The data forwarding method according to claim 6, wherein the transmitting, by the first network side device, the first address information for data forwarding to the second network side device comprises transmitting, by the first network side device, a first addition request message to the second network side device,
wherein the first addition request message carries the first address information, and the first addition request message is used to add the target secondary base station connected to the UE in a procedure of switching the UE from the standalone state to the dual connectivity state.

8. The data forwarding method according to claim 1, wherein in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

9. The data forwarding method according to claim 8, wherein the transmitting, by the first network side device, the first address information for data forwarding to the second network side device comprises transmitting, by the first network side device, a second addition request message to the second network side device,
wherein the second addition request message carries the first address information, and the second addition request message is used to add the target secondary base station connected to the UE in a procedure of changing a secondary base station connected to the UE.

10. A data forwarding method, comprising receiving, by a second network side device, first address information for data forwarding from a first network side device,
wherein the first address information comprises second address information about a source node for data forwarding and third address information about an intermediate node, the intermediate node is a data relay node between the source node and a target node for data forwarding, and the source node is a secondary base station and/or the target node is a secondary base station.

11. The data forwarding method according to claim 10, wherein after receiving, by the second network side device, the first address information for data forwarding from the first network side device, the data forwarding method further comprises:
determining, by the second network side device, whether or not direct data forwarding is supported between the source node and the target node in accordance with the second address information;
in the case that the direct data forwarding is supported between the source node and the target node, adding, by the second network side device, the second address information into an address list of nodes allowed to connect; and
in the case that the direct data forwarding is not supported between the source node and the target node, adding, by the second network side device, the third address information into the address list of nodes allowed to connect.

12. The data forwarding method according to claim 10, wherein in the case that the first network side device is a source primary base station connected to a User Equipment (UE) in a dual connectivity state and the second network side device is a target base station, the second address information is address information about a source secondary base station connected to the UE in the dual connectivity state, and the third address information is address information about the source primary base station, wherein the target base station is a base station connected to the UE after the UE has been switched from the dual connectivity state to a standalone state.

13. The data forwarding method according to claim 10, wherein in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

14. The data forwarding method according to claim 10, wherein in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

15. A data forwarding device, comprising a memory, a transceiver and a processor,
wherein the memory is configured to store therein a program instruction, the transceiver is configured to receive and transmit data under the control of the processor, and the processor is configured to read the program instruction in the memory,
wherein the transceiver is configured to transmit first address information for data forwarding to a second network side device,
wherein the first address information is transmitted by a first network side device, the first address information comprises second address information about a source node for data forwarding and third address information about an intermediate node, the intermediate node is a data relay node between the source node and a target node for data forwarding, and the source node is a secondary base station and/or the target node is a secondary base station.

16. The data forwarding device according to claim 15, wherein in the case that the first network side device is a source primary base station connected to a User Equipment (UE) in a dual connectivity state and the second network side device is a target base station, the second address information is address information about a source secondary base station connected to the UE in the dual connectivity state, and the third address information is address information about the source primary base station, wherein the target base station is a base station connected to the UE after the UE has been switched from the dual connectivity state to a standalone state.

17. The data forwarding device according to claim 16, wherein the transceiver is further configured to transmit first request information to the source secondary base station connected to the UE in the dual connectivity state, and the first request information is used to request to obtain the second address information.

18. The data forwarding device according to claim 16 or 17, wherein the transceiver is further configured to transmit a first handover request message to a Mobility Management Entity (MME) so that an Access and Mobility Management Function (AMF) transmits the first address information to the second network side device in accordance with the first handover request message,
wherein the first handover request message carries the first address information, and the second network side device is a base station under a network system different from the first network side device.

19. The data forwarding device according to claim 16 or 17, wherein the transceiver is further configured to transmit a second handover request message to the second network side device, the second handover request message carries the first address information, and the second network side device is a base station under a same network system as the first network side device.

20. The data forwarding device according to claim 15, wherein in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

21. The data forwarding device according to claim 20, wherein the transceiver is further configured to transmit a first addition request message to the second network side device, wherein the first addition request message carries the first address information, and the first addition request message is used to add the target secondary base station connected to the UE in a procedure of switching the UE from the standalone state to the dual connectivity state.

22. The data forwarding device according to claim 15, wherein in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

23. The data forwarding device according to claim 22, wherein the transceiver is further configured to transmit a second addition request message to the second network side device,
wherein the second addition request message carries the first address information, and the second addition request message is used to add the target secondary base station connected to the UE in a procedure of changing a secondary base station connected to the UE.

24. A data forwarding device, comprising a first transmission module configured to transmit first address information for data forwarding to a second network side device,
wherein the first address information is transmitted by a first network side device, the first address information comprises second address information about a source node for data forwarding and third address information about an intermediate node, the intermediate node is a data relay node between the source node and a target node for data forwarding, and the source node is a secondary base station and/or the target node is a secondary base station.

25. The data forwarding device according to claim 24, wherein in the case that the first network side device is a source primary base station connected to a User Equipment (UE) in a dual connectivity state and the second network side device is a target base station, the second address information is address information about a source secondary base station connected to the UE in the dual connectivity state, and the third address information is address information about the source primary base station, wherein the target base station is a base station connected to the UE after the UE has been switched from the dual connectivity state to a standalone state.

26. The data forwarding device according to claim 25, further comprising a second transmission module configured to transmit first request information to the source secondary base station connected to the UE in the dual connectivity state, and the first request information is used to request to obtain the second address information.

27. The data forwarding device according to claim 25 or 26, wherein the first transmission module comprises a first transmission unit configured to transmit a first handover request message to a Mobility Management Entity (MME) so that an Access and Mobility Management Function (AMF) transmits the first address information to the second network side device in accordance with the first handover request message,
wherein the first handover request message carries the first address information, and the second network side device is a base station under a network system different from the first network side device.

28. The data forwarding device according to claim 25 or 26, wherein the first transmission module comprises a second transmission unit configured to transmit a second handover request message to the second network side device, the second handover request message carries the first address information, and the second network side device is a base station under a same network system as the first network side device.

29. The data forwarding device according to claim 24, wherein in the case that the first network side device is a target primary base station connected to the UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

30. The data forwarding device according to claim 29, wherein the first transmission module comprises a third transmission unit configured to transmit a first addition request message to the second network side device,
wherein the first addition request message carries the first address information, and the first addition request message is used to add the target secondary base station connected to the UE in a procedure of switching the UE from the standalone state to the dual connectivity state.

31. The data forwarding device according to claim 24, wherein in the case that the first network side device is a primary base station connected to the UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

32. The data forwarding device according to claim 31, wherein the first transmission module comprises a fourth transmission unit configured to transmit a second addition request message to the second network side device, wherein the second addition request message carries the first address information, and the second addition request message is used to add the target secondary base station connected to the UE in a procedure of changing a secondary base station connected to the UE.

33. A data forwarding device, comprising a memory, a transceiver and a processor,
wherein the memory is configured to store therein a program instruction, the transceiver is configured to receive and transmit data under the control of the processor, and the processor is configured to read the program instruction in the memory,
wherein the transceiver is configured to receive first address information for data forwarding from a first network side device,
wherein the first address information is received by a second network side device, the first address information comprises second address information about a source node for data forwarding and third address information about an intermediate node, the intermediate node is a data relay node between the source node and a target node for data forwarding, and the source node is a secondary base station and/or the target node is a secondary base station.

34. The data forwarding device according to claim 33, wherein the processor is configured to:
determine whether or not direct data forwarding is supported between the source node and the target node in accordance with the second address information;
in the case that the direct data forwarding is supported between the source node and the target node, add the second address information into an address list of nodes allowed to connect; and
in the case that the direct data forwarding is not supported between the source node and the target node, add the third address information into the address list of nodes allowed to connect.

35. The data forwarding device according to claim 34, wherein in the case that the first network side device is a source primary base station connected to a User Equipment (UE) in a dual connectivity state and the second network side device is a target base station, the second address information is address information about a source secondary base station connected to the UE in the dual connectivity state, and the third address information is address information about the source primary base station, wherein the target base station is a base station connected to the UE after the UE has been switched from the dual connectivity state to a standalone state.

36. The data forwarding device according to claim 34, wherein in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

37. The data forwarding device according to claim 34, wherein in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

38. A data forwarding device, comprising a reception module configured to receive first address information for data forwarding from a first network side device,
wherein the first address information is received by a second network side device, the first address information comprises second address information about a source node for data forwarding and third address information about an intermediate node, the intermediate node is a data relay node between the source node and a target node for data forwarding, and the source node is a secondary base station and/or the target node is a secondary base station.

39. The data forwarding device according to claim 38, further comprising:
a determination module configured to determine whether or not direct data forwarding is supported between the source node and the target node in accordance with the second address information;
a first addition module configured to, in the case that the direct data forwarding is supported between the source node and the target node, add the second address information into an address list of nodes allowed to connect; and
a second addition module configured to, in the case that the direct data forwarding is not supported between the source node and the target node, add the third address information into the address list of nodes allowed to connect.

40. The data forwarding device according to claim 39, wherein in the case that the first network side device is a source primary base station connected to a User Equipment (UE) in a dual connectivity state and the second network side device is a target base station, the second address information is address information about a source secondary base station connected to the UE in the dual connectivity state, and the third address information is address information about the source primary base station, wherein the target base station is a base station connected to the UE after the UE has been switched from the dual connectivity state to a standalone state.

41. The data forwarding device according to claim 39, wherein in the case that the first network side device is a target primary base station connected to a UE after the UE has been switched from a standalone state to a dual connectivity state and the second network side device is a target secondary base station connected to the UE after the UE has been switched from the standalone state to the dual connectivity state, the second address information is address information about a source base station connected to the UE in the standalone state, and the third address information is address information about the target primary base station.

42. The data forwarding device according to claim 39, wherein in the case that the first network side device is a primary base station connected to a UE in a dual connectivity state and the second network side device is a target secondary base station connected to the UE after the UE has changed a secondary base station in the dual connectivity state, the second address information is address information about a source secondary base station connected to the UE in the dual connectivity state, and the third address information is address information about the primary base station.

43. A processor-readable storage medium storing therein a computer program, wherein the computer program is executed by a processor so as to implement the data forwarding method according to any one of claims 1 to 9, or implement the data forwarding method according to any one of claims 10 to 14.
